# FASCICULE DE BREVET EUROPEEN

(11) **EP 3 097 616 B1**
(45) Date de publication et mention de la délivrance du brevet: **03.01.2018**
(21) Numéro de dépôt: 15705507.0
(22) Date de dépôt: 19.01.2015
(51) Int. Cl.: G02F 1/355, H01S 3/11, G02F 1/35, H01S 3/113, H01S 3/04, H01S 5/40

(54) **PROCEDE DE FABRICATION DE MIROIRS A ABSORBANT SATURABLE SEMICONDUCTEUR**
VERFAHREN ZUR HERSTELLUNG VON SPIEGELN MIT SÄTTIGBAREM HALBLEITENDEM ABSORBIERENDEM MATERIAL
METHOD FOR MANUFACTURING MIRRORS WITH SATURABLE SEMICONDUCTING ABSORPTIVE MATERIAL

(30) Priorité: 20.01.2014 FR 1450430
(43) Date de publication de la demande: 30.11.2016
(73) Titulaire: Centre National de la Recherche Scientifique, 75794 Paris Cedex 16 (FR)
(72) Inventeur: OUDAR, Jean-Louis, F-92290 Chatenay Malabry (FR); BOUCHOULE, Sophie, F-94800 Villejuif (FR)
(74) Mandataire: Osha Liang
(86) Numéro de dépôt international: PCT/EP2015/050872
(87) Numéro de publication internationale: WO 2015/107186

(56) Documents cités:
- FR-A1- 2 835 065
- US-A1- 2009 279 901
- ALEXANDER STEINMETZ ET AL: "Nonlinear compression of Q-Switched laser pulses to the realm of ultrashort durations", OPTICS EXPRESS, vol. 19, no. 4, 14 février 2011 (2011-02-14), page 3758, XP055006221, ISSN: 1094-4087, DOI: 10.1364/OE.19.003758

## Description

### ETAT DE L'ART

### Domaine technique de l'invention

La présente invention concerne un procédé de fabrication de miroirs à absorbant saturable semi-conducteur et des miroirs obtenus par le dit procédé.

### Etat de l'art

Au cours des dernières années, la génération de sources optiques à impulsions courtes (100fs à 1ps) est devenue une technologie de plus en plus importante dans de nombreuses applications, par exemple le micro-usinage par laser, la formation de couches minces ou encore le nettoyage par laser.

Les miroirs à absorbant saturable semi-conducteur (ou SESAM selon l'abréviation de l'expression anglo-saxonne « SEmiconductor Saturable Absorber Mirror ») font partie des éléments clé de cette technologie, puisqu'ils permettent de mettre en forme temporellement les impulsions et d'ajuster les caractéristiques de l'émission laser, dont notamment la durée d'impulsion, la puissance émise et la stabilité.

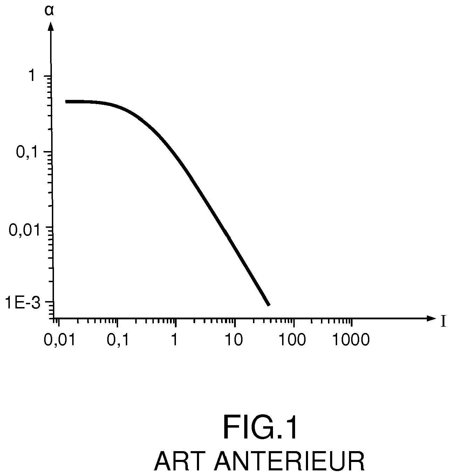

Le fonctionnement d'un SESAM est basé sur le phénomène de saturation de l'absorption des matériaux semi-conducteurs. La variation du coefficient d'absorption α d'un matériau absorbant saturable dépend de l'intensité I du signal lumineux incident qui le traverse. La figure 1A illustre le coefficient d'absorption d'un matériau absorbant saturable en fonction de l'intensité I du signal lumineux incident. Les signaux lumineux de faible intensité subissent l'absorption intrinsèque du matériau et sont en conséquence absorbés. Par contre, les signaux lumineux de forte intensité rendent le matériau semi-conducteur transparent jusqu'à réduire son absorption à une valeur sensiblement nulle et sont transmis sans être absorbés. C'est le phénomène de saturation de l'absorption. La plupart des matériaux montrent de l'absorption saturable, mais souvent à des intensités lumineuses très élevées, proches du dommage optique. Les matériaux semi-conducteur présentent des structures énergétiques particulières qui permettent des phénomènes de saturation de l'absorption à des seuils d'intensité lumineuse moins élevés. Plus précisément, les porteurs de la bande de valence (les électrons) passent dans un état d'énergie supérieure (la bande de conduction) sous l'effet d'une intensité lumineuse incidente suffisamment élevée, avec un temps plus court que le temps de relaxation des porteurs vers l'état fondamental. Il s'ensuit le remplissage de l'état d'énergie supérieure au détriment du niveau fondamental et une saturation de l'absorption. Les paramètres qui caractérisent un absorbeur saturable semi-conducteur sont notamment la plage de longueur d'onde d'absorption, l'intensité lumineuse seuil pour observer une saturation de l'absorption et la réponse dynamique, c'est-à-dire la vitesse à laquelle il récupère son niveau d'absorption non saturée lorsqu'il n'est plus éclairé. Ce dernier paramètre est directement lié aux temps de vie des porteurs dans l'état excité.

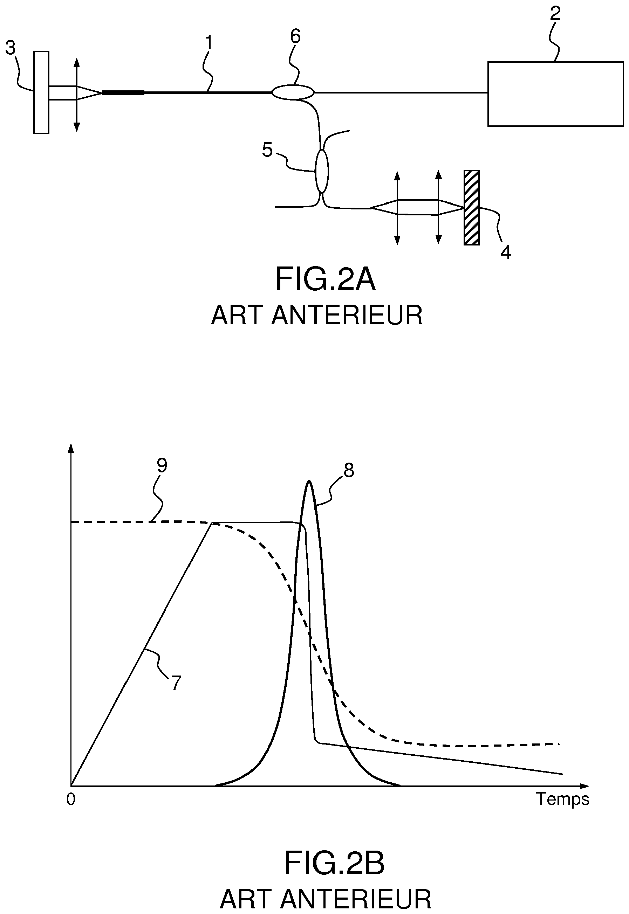

Insérés dans une cavité laser, les SESAMs sont utilisés pour générer une émission laser impulsionnelle, en régime de verrouillage de modes (blocage de modes) passif. Un exemple de dispositif laser dans lequel est inséré un miroir à absorbant saturable semi-conducteur (SESAM) est représenté sur la figure 2A. Le dispositif laser comprend dans cet exemple une fibre dopée 1 comme milieu à gain. La fibre est pompée optiquement par une diode 2. Le faisceau issu de la diode est injecté dans la fibre dopée 1 au moyen d'un multiplexeur 6. La cavité du dispositif laser est une cavité Fabry-Pérot composée d'un miroir 3 à réflexion totale, d'un SESAM 4 et d'un coupleur 5 pour prélever le signal lumineux de sortie avant et après le passage à travers le SESAM. Le graphique de la figure 2B illustre le principe de fonctionnement d'un dispositif laser tel que représenté sur la figure 2A. Cette figure représente en fonction du temps les pertes laser (courbe 9 en pointillés longs), principalement les pertes issues de la cavité du laser, le gain du dispositif laser (courbe 7 en pointillés courts) et l'émission laser (courbe 8 en trait continu). A t=0, le pompage optique du milieu à gain commence, les pertes sont élevées et sont maintenues élevées par le SESAM qui a un comportement absorbant à faible intensité incidente. Pendant ce temps de pompage, la valeur du gain augmente jusqu'à s'approcher de la valeur des pertes. Jusque-là, l'émission laser est toujours bloquée par le SESAM qui amplifie artificiellement les pertes de la cavité. Puis l'augmentation du gain induit l'augmentation du flux lumineux dans la cavité, ce qui provoque le blanchiment du matériau absorbant saturable à la longueur d'onde de l'émission laser. Ainsi les pertes chutent. Dès que le gain devient supérieur aux pertes, une impulsion laser prend naissance, entrainant une diminution rapide du gain. On obtient ainsi des impulsions très courtes (durée ∼ ps, fs).

Pour que les SESAMs soient efficaces dans ce contexte, c'est-à-dire qu'ils puissent interagir avec des puissances laser importantes (typiquement de l'ordre de 1 mW à plusieurs W), on cherche à ce qu'ils remplissent plusieurs conditions, dont notamment un coefficient d'absorption important, une courte durée de vie des porteurs excités du matériau absorbant saturable (typiquement de l'ordre de la picoseconde) et une bonne dissipation thermique.

Plusieurs procédés de réalisation de SESAMs ont été développés. En particulier, il existe deux approches pour la croissance des SESAMs : la croissance dite « hors accord de maille » et la croissance dite « en accord de maille ». Dans la croissance dite « hors accord de maille », le paramètre de maille du substrat est différent du paramètre de maille de la couche à épitaxier, ce qui laisse un plus grand choix dans les matériaux à épitaxier. Les atomes se déposent dans un premier temps selon la structure cristalline du substrat. Le matériau déposé est donc contraint par le substrat. Mais lorsque l'épaisseur de la couche épitaxiée augmente, les atomes se déposent selon la structure du matériau non contraint, et l'accommodation du paramètre de maille entraîne la création de dislocations. Ceci a l'avantage d'introduire naturellement des défauts dans les couches épitaxiées, ce qui va permettre de diminuer la durée de vie des porteurs excités. Néanmoins, les dispositifs obtenus avec cette méthode sont peu robustes à cause des dislocations. Au contraire, la croissance dite « en accord de maille » permet d'obtenir une continuité des liaisons interatomiques à l'interface entre le substrat et la couche à épitaxier. Les dispositifs ainsi réalisés ont une excellente qualité cristalline et sont plus robustes ; cependant cette méthode est dépendante du type de substrat utilisé, limitant le choix de matériaux et donc le choix de la gamme de longueur d'onde d'utilisation. En particulier, pour des longueurs d'onde supérieures à 1.1µm, il est nécessaire d'utiliser un substrat en InP (Phosphore d'Idium). Or, les composés semi-conducteurs à base d'InP ont un mauvais comportement thermique, ils évacuent mal la chaleur ; ce qui limite les performances de l'utilisation des SESAMs dans les dispositifs lasers. Une solution efficace à ce problème technique est l'utilisation d'un dissipateur thermique.

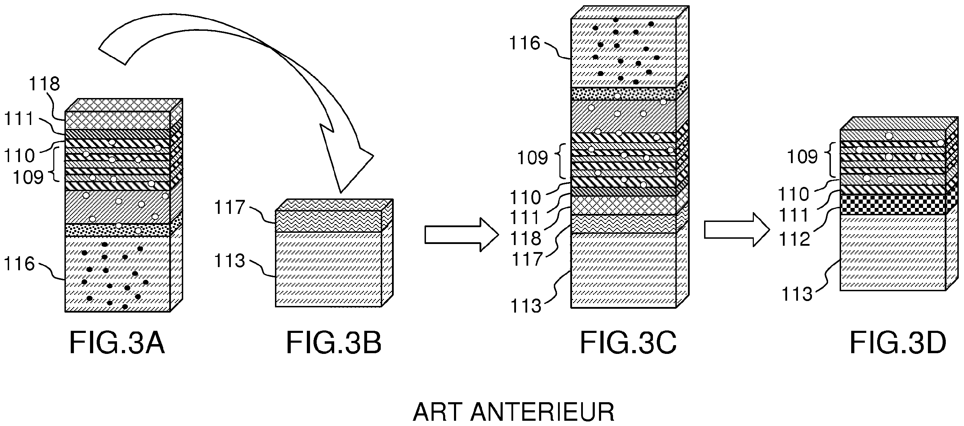

Une technique de réalisation d'un composant à absorbant saturable semi-conducteur sur un substrat InP avec l'insertion d'un dissipateur thermique est décrite dans le brevet FR2835065. Les figures 3A à 3D illustrent ce procédé de réalisation. Cette technique comprend la formation d'une première structure (figure 3A) comprenant un empilement de couches sur un substrat 115, par exemple en InP, l'empilement de couches comprenant notamment un matériau absorbant saturable 109, une couche métallique 111 pour la formation d'un miroir et une première couche métallique 116 destiné à la formation d'un joint de brasure. La technique décrite comprend par ailleurs la formation d'une deuxième structure (figure 3B), obtenue par dépôt d'une deuxième couche métallique 117 destiné à la formation du joint de brasure sur un substrat thermiquement conducteur 113. Les première 116 et deuxième 117 couches métalliques sont ensuite mises en contact et assemblées en réalisant un joint de brasure 112 par inter diffusion solide-liquide (figure 3C). La réalisation du composant se termine par le retrait du substrat d'InP 115 (figure 3D). Le substrat thermiquement conducteur 113 a alors le rôle de dissipateur thermique dans le composant ainsi réalisé.

Cette technique permet de réaliser des composants à absorbant saturable semi-conducteur ayant un meilleur comportement thermique que les composants à absorbant saturable semi-conducteur basé sur InP. Néanmoins, cette technique se prête mal à la fabrication collective d'un grand nombre de composants. En effet, la technique de report de la première structure sur la deuxième structure tel que décrit dans le paragraphe précédent est réalisable sur 1cm² au maximum, à moins de réaliser la brasure dans une presse de grande surface qu'il serait nécessaire de développer spécialement à cet effet. Il en résulte des coûts élevés liés au prix de l'épitaxie, ou au prix du développement d'une presse compatible avec une brasure en grande surface. De plus, dans ce dernier cas, il faut prévoir de scier les composants individuels, une fois que le retrait de substrat a été effectué.

La présente invention propose un procédé de fabrication de miroirs à absorbant saturable semi-conducteur permettant notamment la réalisation de miroirs à absorbant saturable semi-conducteur en grande quantité avec une excellente qualité.

### RESUME DE L'INVENTION

Selon un premier aspect, l'invention concerne un procédé de fabrication de miroirs à absorbant saturable semi-conducteur (SESAM) comprenant : le dépôt sur un substrat de croissance d'un matériau absorbant saturable semi-conducteur pour former une structure; le dépôt d'au moins une couche métallique sur la structure pour former un premier miroir,; le dépôt par électrodéposition à travers un masque électriquement isolant d'un substrat thermiquement conducteur sur la couche métallique, permettant un dépôt sélectif du substrat thermiquement conducteur qui prédéfinit le périmètre des SESAMs.

Il est ainsi possible d'une part de déposer une couche métallique dense et homogène avec un contrôle de l'épaisseur finale du SESAM et d'autre part de fabriquer de manière collective à faible coût un grand nombre de miroirs SESAMs à absorbant saturable semi-conducteur de caractéristiques identiques à partir d'une unique plaque epitaxiée.

Selon une variante, le procédé comprend une étape d'introduction de défauts cristallins dans le matériau absorbant saturable semi-conducteur dans le but d'ajuster la durée de vie des porteurs dans le matériau absorbant saturable semi-conducteur inférieure. La présence de défauts cristallins dans le matériau absorbant saturable permet avantageusement d'accélérer le processus de relaxation de l'absorption sans dégradation des propriétés de cette dernière, les défauts jouant le rôle de centres de capture efficaces de paires électron-trou.

Selon une variante, l'introduction de défauts cristallins comprend une étape d'irradiation ionique dans le matériau à absorbant saturable. Il est possible avec la méthode d'irradiation ionique de réaliser l'introduction des défauts cristallins à n'importe quel moment de la fabrication entre deux étapes de croissance et d'ajuster la profondeur des couches irradiée.

Selon une variante, le premier miroir sert de cathode pour l'électrodéposition. Ainsi, le dépôt a lieu directement sur le dispositif sans étape ou couche intermédiaire.

Selon une variante, le masque électriquement isolant présente des motifs de structuration comprenant des régions isolantes et des évidements, définissant le périmètre des miroirs à absorbant saturable semi-conducteur. Les reliefs isolants déterminant les motifs à structurer et les évidements permettent notamment la formation de trajets préférentiels pour la découpe des SESAMs individuels et une relaxation des éventuelles contraintes de la couche métallique électrodéposée.

Selon une variante, le procédé de fabrication comprend en outre une étape de dépôt d'un second miroir sur le matériau absorbant saturable pour la formation d'une micro cavité Fabry-Pérot.

Selon une variante, la formation de la structure comprend une étape de dépôt d'une première couche de phase entre le premier miroir et le matériau absorbant saturable et une étape de dépôt d'une deuxième couche de phase entre le second miroir et le matériau absorbant saturable. Notamment, en ajustant les épaisseurs des couches de phase, il est possible de convenablement positionner la couche active au maximum d'intensité de l'onde intra-cavité.

Selon une variante de l'invention, le procédé comprend en outre une étape de séparation des miroirs afin d'obtenir un grand nombre de SESAM à partir d'une seule plaque epitaxiée.

Selon un second aspect de l'invention, l'invention concerne un miroir à absorbant saturable semi-conducteur obtenu par un procédé tel que décrit selon le premier aspect et ses variantes et comprenant: un matériau absorbant saturable semi-conducteur, un premier miroir disposé sur le matériau absorbant saturable comprenant une couche métallique et un substrat thermiquement conducteur réalisé par dépôt électrolytique sur le miroir. Avantageusement, le premier miroir est en Au ou en Cu afin d'obtenir une réflectivité et une conductivité thermique élevées.

Selon une variante, les porteurs du matériau ont une durée de vie inférieure à 100 ps sur l'état excité permettant de diminuer le temps de réponse du SESAM. Cette durée courte de vie des porteurs permet d'optimiser c'est-à-dire de réduire le temps de réponse du miroir à absorbant saturable semi-conducteur et donc d'augmenter la réponse dynamique des SESAM (paramètres clés des SESAM tels que décrit dans l'art antérieur).

Selon une variante, le matériau absorbant saturable comprend un empilement de couches semi-conductrices formant des puits quantiques et des barrières. Les dimensions des épaisseurs des puits quantiques et des barrières qui séparent les puits quantiques permettent d'avoir une absorption excitonique plus particulièrement marquée à la longueur d'onde d'utilisation. Avantageusement, le matériau absorbant saturable comprend un empilement de couches d'InGaAs formant des puits quantiques et des couches d'InP formant des barrières pour un fonctionnement du SESAM autour de 1,5µm, ou d'autres compositions de puits quantiques (par exemple InGaAsN pour les puits et InGaAs ou InP pour les barrières) permettant d'atteindre des longueurs d'onde de fonctionnement allant jusqu'à 2 µm ou 2,5 µm.

Selon une variante de l'invention, le substrat thermiquement conducteur est en Cu afin de réaliser un dépôt à cout réduit et d'obtenir un SESAM ayant une conductivité thermique élevée.

### BREVE DESCRIPTION DES DESSINS

D'autres avantages et caractéristiques de l'invention apparaîtront à la lecture de la description, illustrée par les figures suivantes :
- Figure 1 (déjà décrite), un graphique représentant la variation du coefficient d'absorption α d'un matériau absorbant saturable en fonction de l'intensité I d'un faisceau lumineux incident qui le traverse;
- Figures 2A et 2B (déjà décrites), un schéma d'un dispositif laser comprenant une cavité et un miroir à absorbant saturable inséré dans la cavité laser;
- Figures 3A à 3D (déjà décrites), des schémas représentant les étapes d'une méthode de réalisation d'un composant à absorbant saturable selon l'art antérieur;
- Figures 4A à 4H, des schémas représentant un premier exemple de procédé de réalisation de miroirs à absorbant saturable semi-conducteur selon la présente description ;
- Figure 5, un schéma représentant le principe du dépôt électrolytique pour la réalisation de miroirs à absorbant saturable semi-conducteur selon la présente description ;
- Figures 6A à 6J, des schémas représentant un deuxième exemple de procédé de réalisation de miroirs à absorbant saturable semi-conducteur selon la présente description ;
- Figure 7, un graphique représentant le temps de réponse mesuré sur des SESAMs réalisés avec un exemple de procédé de fabrication selon la présente description ;
- Figure 8, un graphique représentant les caractéristiques non-linéaires de SESAMs réalisés avec un exemple de procédé de fabrication selon la présente description.

### DESCRIPTION DETAILLEE

Dans les figures, les éléments identiques sont indiqués par les mêmes références.

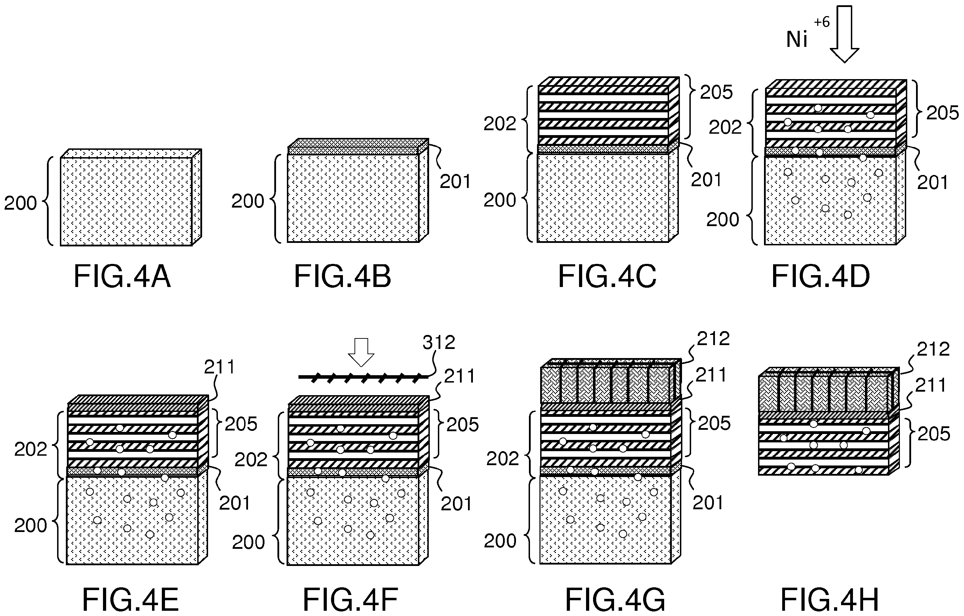

Les figures 4A à 4H représentent les différentes étapes d'un exemple de procédé de réalisation de plusieurs miroirs à absorbant saturable semi-conducteur obtenus à partir d'une unique plaque de croissance epitaxiale selon la présente description.

La première étape (figures 4A, 4B, 4C) comprend la croissance de couches semi-conductrices 202 sur un substrat de croissance 200, par exemple un substrat InP (Phosphore d'Idium). Les couches semi-conductrices que l'on fait croître sur le substrat sont successivement, selon un exemple, une couche d'arrêt 201, par exemple une couche InGaAs (Arséniure de gallium-indium), par exemple d'épaisseur 400 nm, puis un empilement 205 alternant des puits quantiques et des barrières de séparation des puits quantiques, cet ensemble étant élaboré pour avoir les propriétés d'absorption excitoniques voulues à la longueur d'onde d'utilisation, par exemple 1,55 µm.

La croissance des couches semi-conductrices 202 sur le substrat est effectuée, par exemple, par épitaxie MOVPE (MOVPE pour « Métal Organic Vapor Phase Epitaxy ») ou par épitaxie par jet moléculaires (EJM). Dans le cas de l'EJM, la croissance du matériau résulte de l'interaction sous ultra-vide d'un jet moléculaire avec la surface du substrat chauffé. Le principe de la MOVPE repose sur l'interaction d'un mélange gazeux avec le substrat. La MOVPE n'a pas lieu sous ultra-vide. La phase gazeuse est composée de molécules contenant les éléments métalliques que l'on veut incorporer sur le substrat, et d'un gaz vecteur permettant à la fois de maintenir constante la pression dans le réacteur et d'orienter le flux des précurseurs vers le substrat.

Un accord de maille entre les réseaux cristallins des couches et du substrat est avantageusement respecté. C'est pour cette raison que la croissance des couches se fait sur un substrat InP et non pas, par exemple, sur un substrat de silicium (Si). La composition de la couche d'arrêt est ajustée pour obtenir une bande d'absorption située, par exemple, vers 1,41 µm et les épaisseurs des puits quantiques et des barrières entre puits quantiques sont alors ajustées pour obtenir une absorption excitonique marquée autour de 1,55 µm.

De préférence, le matériau absorbant saturable du SESAM tel que décrit dans la présente invention a de bonnes propriétés de saturation d'absorption à la longueur d'onde d'utilisation. Les propriétés de saturation d'absorption dépendent des bandes d'énergie du matériau (ensemble des états du matériau), c'est-à-dire par exemple la différence entre l'énergie de l'état fondamental du matériau et l'énergie de l'état excité. Préférentiellement, le matériau absorbant est réalisé à l'aide de puits quantiques (épaisseur typique de 7 à 12 nm), mais des couches plus épaisses conviennent également. La composition des puits quantiques et des barrières qui séparent les puits quantiques est alors ajustée afin d'avoir une absorption excitonique plus particulièrement marquée à la longueur d'onde d'utilisation.

Suivant la valeur du gain du milieu actif du laser, on peut utiliser un seul ou plusieurs puits quantiques. Dans ce dernier cas, le nombre de puits quantiques peut être, par exemple, égal à 8, chaque puits quantique ayant une épaisseur de 9 nm et chaque barrière de séparation entre puits quantiques ayant une épaisseur de 7 nm. Cette faible épaisseur absorbante permet avantageusement de réduire les effets thermiques et d'avoir des puissances de saturation compatibles avec les puissances laser.

Selon un mode de réalisation du procédé de la présente demande, l'étape de croissance de matériaux sur le substrat de croissance peut être suivie d'une étape d'irradiation ionique (figure 4D). Néanmoins cette étape peut être réalisée à n'importe quel moment de la fabrication entre chaque étape de croissance. Des ions, par exemple des ions Ni⁺⁶, sont envoyés sur la deuxième couche de phase. Ils traversent alors la structure constituée des couches successives pour finir leur course dans le substrat de croissance. Lors de leur parcours, les ions créent des défauts cristallins dans le matériau absorbant. La présence de défauts dans le matériau absorbant permet avantageusement d'accélérer le processus de relaxation de l'absorption sans dégradation des propriétés de cette dernière. Les défauts jouent en effet le rôle de centres de capture efficaces de paires électron-trou. L'énergie d'irradiation est ajustée pour que les ions traversent toute la structure et finissent leur parcours dans le substrat de croissance. Ce dernier sera par la suite retiré de façon à éviter toute absorption résiduelle causée par les ions.

La diminution du temps de relaxation de l'absorption, qui est le temps de réponse du SESAM, est directement liée à la dose d'irradiation, c'est-à-dire au nombre d'ions par unité de surface. Cette technique permet avantageusement d'ajuster le temps de réponse du SESAM après l'étape de croissance épitaxiale des couches semiconductrices. Des temps de réponse inférieurs à la picoseconde peuvent être obtenus sans dégradation de l'absorption excitonique. La dose d'irradiation d'ions Ni⁺⁶ peut, par exemple, être égale à 2.10¹¹ ions par cm², ce qui conduit à un SESAM dont le temps de réponse est sensiblement égal à 6ps. L'énergie des ions peut être égale à 11 MeV, ce qui induit une distance d'arrêt sensiblement égale à 2µm

Selon un mode de réalisation, il est possible d'introduire ces défauts cristallins au cours de l'étape de croissance des couches semi-conductrices, notamment en effectuant la croissance à basse température ou en réalisant la croissance assistée par plasma.

Selon un mode de réalisation, l'étape suivante du procédé, illustrée sur la figure 4E, comprend une étape de dépôt d'une couche métallique 211 sur la structure semiconductrice 202. Cette couche métallique a un rôle de miroir dans le SESAM et aura, avantageusement, un rôle d'électrode lors de la prochaine étape pour le dépôt électrolytique. Le dépôt de la couche métallique 211 est effectué par exemple par évaporation sous vide (pression sensiblement égale à 10⁻⁷ mbar. Le matériau utilisé pour réaliser le miroir est un métal choisi pour ses bonnes qualités optiques et thermiques, c'est-à-dire pour présenter une réflectivité et une conductivité thermique élevées. Un dépôt d'argent (Ag) ou d'or (Au) vérifie bien ces deux conditions. A titre d'exemple non limitatif, un miroir d'or de 300nm d'épaisseur peut être formé sur la deuxième couche de phase, après désoxydation de la surface de cette deuxième couche par attaque chimique à base d'acide chlorhydrique (HCL) dilué à 10%. La réflectivité du miroir 211 est alors égale à environ 95%.

Avantageusement, le miroir 211 peut avoir une réflectivité proche de 1. Pour obtenir une telle réflectance le miroir peut être de type : miroir métallique (comme décrit au paragraphe précédent), ou miroir hybride. Le miroir hybride est la combinaison d'un miroir métallique et d'un miroir de Bragg. Le miroir de Bragg est composé de plusieurs périodes de couches diélectriques ou semiconducteurs d'indice de réfraction alternativement haut et bas. Grâce à une réflectivité déjà importante de la couche métallique, l'ajout d'un faible nombre de couches, alternativement de bas indice et de haut indice, permet au miroir hybride d'obtenir une meilleure réflectivité qu'avec un miroir métallique. Cependant, comme les matériaux diélectriques et semi-conducteurs ont une conductivité thermique beaucoup plus faible que les métaux, on peut s'attendre en fonction des configurations et du domaine d'application à ce que le miroir métallique seul permette une meilleure évacuation thermique.

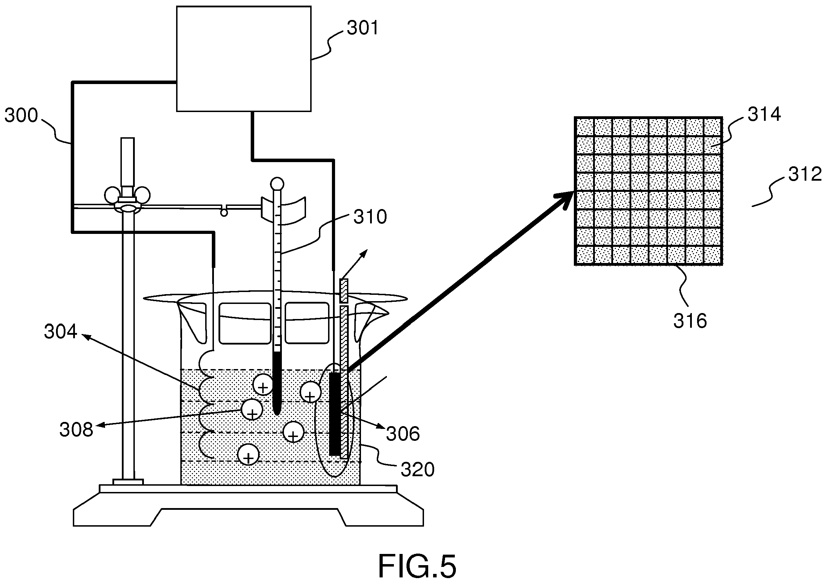

Selon un mode de réalisation, le procédé comprend une étape de dépôt par électrodéposition (éventuellement à travers un masque isolant 312) d'un métal thermiquement conducteur 212 sur la couche métallique 211. Cette étape est illustrée sur les figures 4F, 4G et 5.

Le dépôt métallique par électrodéposition consiste à placer deux électrodes, une anode et une cathode dans un bain (l'électrolyse) qui contient des sels de métaux en solution. Le passage d'un courant électrique entre ces deux électrodes fait migrer ces particules métalliques et entraîne le dépôt d'une fine couche de métal sur la cathode. Le procédé de dépôt électrolytique nécessite donc l'application d'un potentiel électrique externe, ce qui nécessite un contact électrique avec la surface sur laquelle est déposé le métal. Dans le cas de la présente invention, la surface de l'échantillon a avantageusement le rôle de la cathode en étant revêtu d'une couche électriquement conductrice (le premier miroir 211) avant que l'électrodéposition soit faite.

Avantageusement, on réalise le dépôt électrolytique avec du cuivre dont la conductivité thermique (κCu ∼ 400 W / (m * K)) est élevée et qui permet un dépôt à coût réduit. Cependant, d'autres métaux peuvent être envisagés, comme par exemple l'or.

Un exemple de configuration du dispositif pour l'étape de dépôt par électrodéposition est représenté sur la Fig.5.

La technologie d'électrodéposition permet de déposer une matière dense et homogène avec de faibles tensions en minimisant les effets de bords, notamment en contrôlant la constance de la composition de la solution, en s'assurant de l'uniformité du potentiel sur la surface de l'électrode et du transport de masse.

Pour cela, on utilise une cuve 320 avec deux électrodes, une anode 300 (borne positive) et une cathode 302 (borne négative) connectées à un générateur de courant 301. La pièce à recouvrir 306 est placée dans la cuve à électrolyse. La pièce à recouvrir 306 joue le rôle de cathode sur laquelle viennent se déposer des ions métalliques (ions positifs). La solution électrolytique 308 qui remplit la cuve et contient les ions métalliques est choisie en fonction du dépôt désiré. Lors du passage du courant électrique (qui peut être continu ou pulsé) les électrodes attirent à elles les ions de charges opposées. La force motrice de l'écoulement du fluide dirige les particules à la surface de la cathode et les empêche de sédimenter. Des solutions commerciales contenant du cuivre ou de l'or peuvent être utilisées comme électrolytes, par exemple les produits de la société ROHM®) peuvent être utilisés pour optimiser l'épaisseur et l'uniformité des couches métalliques avec une vitesse de dépôt de typiquement 100 µm par heure. Par ailleurs, la température de la solution électrolytique est un paramètre ayant un impact sur les caractéristiques du dépôt, elle est donc surveillée tout le long de dépôt par un thermomètre 310.

Le dépôt électrolytique permet un contrôle de l'épaisseur finale du SESAM en faisant varier les paramètres de temps et de courant généré. Il est ainsi possible d'obtenir un SESAM rigide ou souple, suivant l'épaisseur du métal déposé, typiquement entre ∼ 1 µm à > 100 µm.

Ainsi par exemple, une couche de cuivre d'épaisseur 100µm peut être déposée sur une surface de 7*7mm² à partir d'une solution électrolytique comprenant du sulfate de cuivre hydraté (CuSO4·5 H2O - 0.075) et de l'acide sulfurique (H2SO4 - 0.196) avec une densité de courant électrique de 60mA.cm^{-2,} à une température de 20° et en environ 90min. Une couche d'or d'épaisseur de 80µm peut être déposée à partir d'une solution électrolytique, par exemple une solution Gold-SF provenant de la société METAKEM® avec une densité de courant électrique de 30mA.cm⁻², une température de 45°C et en environ 75min.

Selon une variante de la présente description, le dépôt électrolytique est réalisé à travers un masque isolant électriquement 312 qui est préalablement disposé sur la surface de dépôt (figure 4E). Ce masque, présenté sur la figure 5, peut être en résine photosensible, réalisé par lithographie optique, un procédé classique de la microélectronique. Ce masque présente des motifs de structuration comprenant des reliefs isolants 316 déterminant le motif à structurer et des évidements 314. Au niveau des reliefs isolants, le courant ne passe pas et il n'y a pas de dépôt. Au niveau des évidements, le courant passe et il y a dépôt d'une couche métallique. Les motifs de structuration peuvent être notamment des motifs rectangulaires disposés en matrice, par exemple 20*20 SESAMs carrés de dimensions de 2*2 mm². L'utilisation du masque isolant permet d'obtenir un grand nombre de SESAMs à partir d'une plaque épitaxiée.

Les zones sans dépôt ont deux rôles. D'une part il forme des trajets préférentiels pour la découpe des SESAMs individuels et d'autre part, il permette une relaxation des éventuelles contraintes de la couche métallique électrodéposée. En effet, en grande surface, ces contraintes pourraient entrainer une courbure des SESAMs, par effet 'bi-lame', qui nuirait à leur efficacité optique.

Ce procédé permet ainsi de réaliser des miroirs à absorbant saturable de taille adaptée à chaque besoin spécifique selon la géométrie du masque.

Après le dépôt électrolytique, le cuivre déposé est poli à une épaisseur par exemple de 150µm. Ce polissage permet, notamment, d'éliminer les effets de bord et d'obtenir une surface inférieure plate pour un bon contact avec une sous-monture. Cette monture permet de manipuler plus facilement le dispositif et de contrôler la température du dispositif via par exemple un élément thermoélectrique (élément Peltier).

Le substrat en InP est couramment retiré après cette étape de polissage (figure 4H). Le retrait du substrat peut se faire par un amincissement mécanique suivi d'une gravure chimique sélective, sèche ou (de préférence) humide. L'amincissement permet de réduire l'épaisseur du substrat, par exemple d'environ 90%, et l'étape de gravure chimique permet de retirer ce qui reste du substrat. Le retrait du substrat peut également être réalisé entièrement par gravure chimique sélective, sèche ou humide. La sélectivité du procédé de gravure doit être élevée (typiquement supérieure à 100) afin de protéger le reste de la structure. La couche d'arrêt remplit parfaitement ce rôle. Elle sera ensuite retirée, également par gravure chimique sélective.

Notons que l'épaisseur du dépôt métallique peut être adaptée à des besoins spécifiques. Une épaisseur de 150 µm, comme citée en exemple ci-dessus, permet d'assurer une bonne rigidité mécanique et une planéité des SESAMs une fois que le substrat en InP a été retiré. Mais dans certains cas on peut souhaiter réaliser des SESAMs flexibles, par exemple pour mettre le SESAM en contact avec une surface non plane, telle l'extrémité d'un connecteur de fibre optique. Dans ce cas, on peut limiter l'épaisseur du dépôt métallique à une valeur typique de l'ordre de 10 µm. Plus généralement, l'épaisseur peut être comprise entre 10 et 200µm.

Les SESAMs individuels sont alors séparés les uns des autres par clivage. Cette séparation peut être réalisée par exemple après la gravure de l'InP ou après le dépôt du second miroir.

Il est ainsi possible de fabriquer de manière collective à faible coût un grand nombre de SESAMs à absorbant saturable semi-conducteur de caractéristiques identiques à partir d'une unique plaque epitaxiée, typiquement de 300 à 400 SESAMs pour une plaque de 5cm de diamètre.

Il est ainsi possible, grâce au procédé décrit dans la présente description, de réaliser 10 fois plus de composants qu'avec un procédé de l'art antérieur, tel que décrit par exemple dans la demande de brevet FR2835065.

En effet, ce procédé est d'autant plus rapide qu'il ne nécessite pas d'étape de sciage du substrat hôte (113, Figure 3C) pour séparer les composants selon le mode de réalisation de la demande de brevet FR2835065.

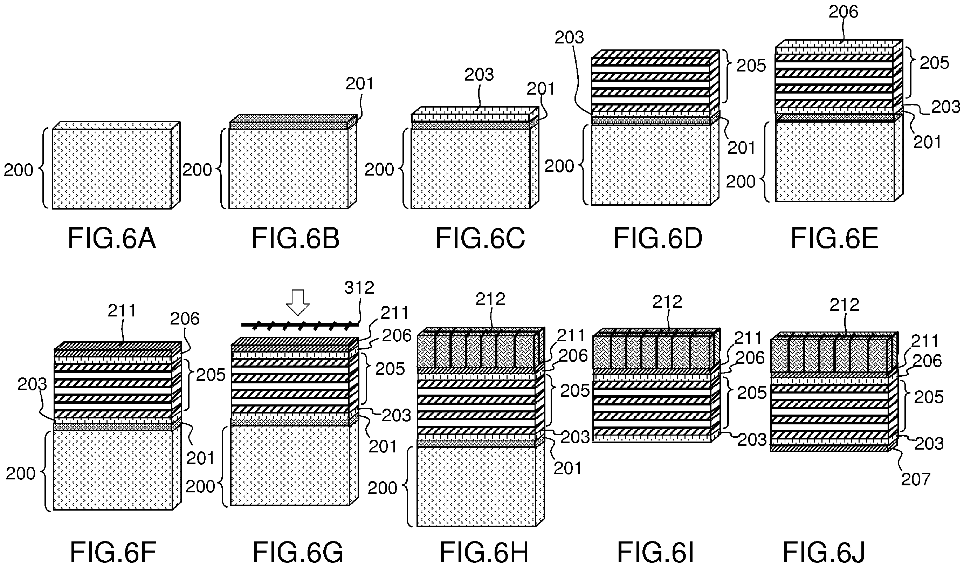

Les figures 6A à 6J illustrent une variante d'un procédé de réalisation de miroirs à absorbant saturable semi-conducteur pour la réalisation d'un SESAM formant une cavité Fabry pérot. Les étapes 6A, 6B, 6D, 6F, 6G, 6H, 6J sont similaires respectivement aux étapes précédemment décrites sur les figures 4A, 4B, 4D, 4E, 4F, 4G.

Selon cette variante, le procédé comprend après l'étape de retrait du substrat InP, une étape de dépôt d'un second miroir 207 (figure 6J). Ce miroir peut être notamment un miroir de Bragg constitué de matériaux diélectriques. Ainsi on obtient un miroir à absorbant saturable qui forme une micro cavité Fabry-Pérot.

Avantageusement, selon cette variante, une première couche de phase 203, par exemple une couche en matériau InP d'épaisseur typiquement de 250 nm, est insérée entre la couche d'arrêt 201 et l'ensemble 205 constitué des puits quantiques et des barrières de puits quantiques (figure 6C) entre l'étape de croissance de la couche d'arrêt 201 (figure 6B) et l'étape de croissance de la structure 205 (figure 6D).

Puis une deuxième couche de phase 206, par exemple une couche en matériau InP d'épaisseur typiquement de 75 nm, est ajoutée sur l'ensemble constitué par les puits quantiques et les barrières de séparation des puits quantiques (figure 6E) entre l'étape de croissance de la structure (figure 6D) et l'étape de croissance de la couche d'arrêt (figure 6F).

En ajustant les épaisseurs des couches de phase, il est possible de convenablement positionner la couche active au maximum d'intensité de l'onde intra-cavité.

Ces étapes sont ensuite suivies par l'étape de séparation des SESAM les uns des autres par clivage telle que décrite précédement.

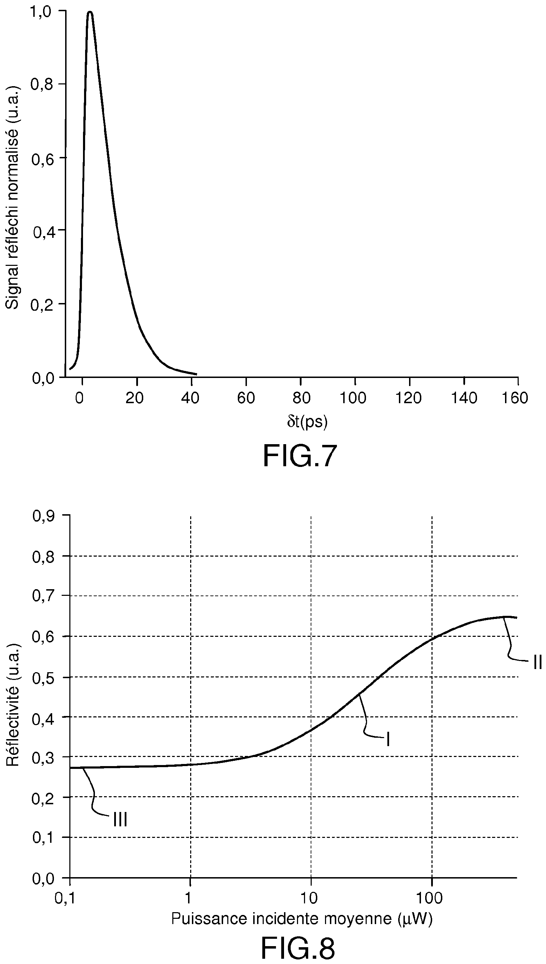

Les figures 7 et 8 présentent des courbes de caractérisation d'un SESAM obtenu selon un exemple de procédé de fabrication tel que décrit dans la présente invention. Ces caractérisations permettent de s'assurer des performances des SESAMs réalisés selon le procédé. Le SESAM a été obtenu avec un procédé tel que décrit dans les figures 4A à 4I. Il comprend le dépôt par épitaxie en accord de maille, sur un substrat d'InP (200, figure 4A) d'une couche de 350nm d'InGaAs (la composition exacte est In_{0.53} Ga_{0.47} As, qui est en accord de maille avec le substrat d'InP), utilisée comme couche d'arrêt pour l'attaque chimique sélective, d'une couche de phase de 270 nm d'InP, puis d'une couche absorbant saturable de 355 nm en InGaAs, et enfin d'une couche de phase de 187 nm d'InP. Sont déposées ensuite une couche de 350 nm d'Au (premier miroir 211) et une couche de 80 µm de Cu par électrodéposition. Pour obtenir la rapidité suffisante du temps de relaxation des porteurs dans les puits quantiques, la structure semiconductrice a été soumise à une implantation ionique avec des ions fer de 400 keV d'énergie, une dose de 1,5 10¹⁴ ions par cm², puis à un recuit rapide (rapid thermal annealing en anglais) à 700°C pendant 15 secondes, destiné à stabiliser les caractéristiques de l'absorbant saturable, et à limiter l'importance des pertes non saturables. L'implantation et le recuit ont été effectués avant le dépôt de la couche d'or, pour éviter que l'or ne diffuse dans le cristal semiconducteur pendant le recuit.

La figure 7 représente la caractérisation temporelle de ce SESAM, c'est-à-dire la mesure du temps de réponse du SESAM. Ce temps de réponse correspond à un temps de relaxation du SESAM pour passer d'un état réfléchissant à un état d'absorption de la lumière incidente. Il est corrélé au temps de vie des porteurs libres dans le matériau. Cette mesure peut être réalisée au moyen d'un banc de mesure à très haute résolution temporelle, de type pompe-sonde. Cette technique consiste à envoyer une première impulsion de forte intensité (impulsion pompe) sur l'échantillon. Cette impulsion va être absorbée et en réaction créer une certaine densité de porteurs libres. Ces derniers vont alors occuper les états disponibles et ainsi diminuer l'absorption de l'échantillon. Une seconde impulsion d'intensité beaucoup plus faible (impulsion sonde) est envoyée à la suite de l'impulsion pompe, avec un retard connu δt. Le nombre d'états disponibles ayant été réduit par l'impulsion pompe précédente, l'absorption de l'impulsion sonde va être modifiée et ainsi dépendre du retard entre les deux impulsions. Pour un très faible retard, l'absorption de la sonde sera faible, alors que pour des retards suffisamment grands devant le temps de relaxation des porteurs, l'absorption de la sonde sera maximale. En mesurant le signal réfléchi qui est directement relié à l'absorption du matériau en fonction du retard δt de l'impulsion sonde par rapport à l'impulsion pompe, il est ainsi possible de mesurer l'évolution temporelle de la densité de porteurs et donc de remonter au temps de réponse de l'échantillon.

Sur la figure 7, on peut constater que le signal réfléchi normalisé est nul lorsque le retard δt est négatif, c'est-à-dire avant qu'une impulsion pompe sature l'absorption du matériau absorbant saturable. Lorsque le retard devient nul, c'est à dire lorsque les impulsions pompes se recouvrent temporellement avec les impulsions sondes, le signal réfléchi normalisé devient alors maximal car la densité de porteurs, et par conséquent la variation d'absorption, est alors maximale. Puis comme attendu, le signal de réflectivité normalisé décroît de façon exponentielle vers 0 lorsque δt devient positif. A partir de ces mesures, on peut en déduire que le temps de réponse du SESAM est égal à 7 ps. Notons que des mesures complémentaires ont montré que ce temps de réponse peut être ajusté (pour des valeurs typiques de 0,5 à 15 ps en faisant varier (de 450° C à 750°C) la température du recuit rapide qui suit l'étape d'implantation ionique.

La figure 8 représente la caractérisation des propriétés non linéaires du SESAM préalablement décrit. La caractérisation est obtenue par mesure de la réflectivité (rapport entre la puissance réfléchie et la puissance incidente) en fonction de la puissance moyenne des impulsions incidentes sur le SESAM. A partir de ces mesures, il est possible de déduire la puissance de commutation I qui correspond à la puissance incidente nécessaire pour blanchir le SESAM. Il est également possible de déterminer le contraste défini par C=101og(Rmax/Rmin) avec Rmin la réflectivité minimale à faible puissance incidente (indiquée par la référence III sur la figure 8) et Rmax la réflectivité maximale à forte puissance incident e(indiquée par la référence II sur la figure 8). Sur la figure 8, on constate bien l'importante variation non-linéaire de la réflectivité R en fonction de la puissance incidente moyenne, ainsi que la convergence de la réflectivité vers une valeur maximale aux très fortes puissances incidentes, preuve d'une saturation de l'absorption. Pour ce SESAM, à partir de la courbe illustrée sur la figure 8, on obtient un contraste de 3.8dB avec une réflectivité minimale de 27% et une réflectivité maximale de 65% ainsi qu'une puissance de commutation de 25µW.

Bien que décrite à travers un certain nombre d'exemples de réalisation détaillés, le miroir à absorbant saturable semi-conducteur et son procédé de fabrication comprenant différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Procédé de fabrication de miroirs à absorbant saturable semi-conducteur comprenant :
- le dépôt sur un substrat de croissance (200) d'un matériau absorbant saturable semi-conducteur (205) pour former une structure;
- le dépôt d'au moins une couche métallique sur la structure pour former un premier miroir (211); **caractérisé en ce que** ledit procédé de fabrication comprend en outre:
- le dépôt par électrodéposition à travers un masque électriquement isolant (312) d'un substrat thermiquement conducteur (212) sur la couche métallique, permettant le dépôt sélectif du substrat thermiquement conducteur, afin de prédéfinir le périmètre des miroirs à absorbant saturable semi-conducteur.

2. Procédé selon la revendication 1, comprenant une étape d'introduction de défauts cristallins dans le matériau absorbant saturable semi-conducteur pour limiter la durée de vie des porteurs dans le matériau absorbant saturable semi-conducteur à 100ps.

3. Procédé selon la revendication 2, dans lequel l'étape d'introduction de défauts cristallins comprend une étape d'irradiation ionique dans le matériau absorbant saturable.

4. Procédé selon l'une quelconque des revendications précédentes, dans lequel le premier miroir (211) sert de cathode (302) pour l'électrodéposition.

5. Procédé selon l'une quelconque des revendications précédentes, dans lequel le masque électriquement isolant (312) présente des motifs de structuration comprenant des régions isolantes (316) et des évidements (314), afin de prédéfinir le périmètre des miroirs à absorbant saturable semi-conducteur.

6. Procédé de fabrication selon l'une quelconque des revendications précédentes, comprenant en outre une étape de dépôt d'un second miroir (207) sur le matériau absorbant saturable.

7. Procédé selon la revendication 6, comprenant en outre une étape de dépôt d'une première couche de phase (203) entre le premier miroir et le matériau absorbant saturable et une étape de dépôt d'une seconde couche de phase (206) entre le second miroir (207) et le matériau absorbant saturable (205).

8. Procédé selon l'une quelconque des revendications précédentes comprenant en outre une étape de séparation des miroirs à absorbant saturable semi-conducteur prédéfinis par le masque (312).

9. Miroir à absorbant saturable semi-conducteur comprenant:
- un matériau absorbant saturable semi-conducteur (205);
- un premier miroir (211) disposé sur le matériau absorbant saturable comprenant une couche métallique;
- un substrat thermiquement conducteur (212) **caractérisé en ce que** ledit substrat est réalisé par dépôt électrolytique sur le premier miroir (211).

10. Miroir à absorbant saturable semi-conducteur selon la revendication 9 dans lequel le matériau absorbant saturable semi-conducteur (205) est constitué d'un empilement de couches semi-conductrices formant des puits quantiques et des barrières.

11. Miroir à absorbant saturable semi-conducteur selon l'une quelconque des revendications 9 à 10, dans lequel le matériau absorbant saturable comprend des défauts cristallins rendant la durée de vie des porteurs dans le matériau absorbant saturable semi-conducteur inférieure à 100ps.

12. Miroir à absorbant saturable semi-conducteur selon l'une quelconque des revendications 9 à 11, dans lequel le substrat (212) thermiquement conducteur a une épaisseur comprise entre 5 et 200µm

13. Miroir à absorbant saturable semi-conducteur selon l'une quelconque des revendications 9 à 12 comprenant en outre un second miroir (207) sur le matériau absorbant saturable.

## Patentansprüche

1. Verfahren zur Herstellung von Spiegeln mit sättigbarem halbleitendem absorbierendem Material, das umfasst:
- die Abscheidung auf einem Wachstumssubstrat (200) eines sättigbaren halbleitenden absorbierenden Materials (205), um eine Struktur zu bilden;
- die Abscheidung von mindestens einer Metallschicht auf der Struktur, um einen ersten Spiegel (211) zu bilden;
**dadurch gekennzeichnet, dass** das besagte Herstellungsverfahren unter anderem umfasst:
- die Abscheidung durch Elektrobeschichtung anhand einer elektrisch isolierenden Maske (312) eines thermisch leitfähigen Substrats (212) auf der Metallschicht, wodurch die selektive Abscheidung des thermisch leitfähigen Substrats ermöglicht wird, um den Umfang der Spiegel mit sättigbarem halbleitendem absorbierendem Material vorab zu bestimmen.

2. Verfahren nach Anspruch 1, umfasst einen Schritt zur Einbringung von Kristalldefekten in das sättigbare halbleitende absorbierende Material, um die Lebensdauer der Träger in dem sättigbaren halbleitenden absorbierenden Material auf 100ps zu begrenzen.

3. Verfahren nach Anspruch 2, in welchem der Schritt zur Einbringung von Kristalldefekten einen Schritt zur Ionenbestrahlung in dem sättigbaren absorbierenden Material umfasst.

4. Verfahren nach einem der vorstehenden Ansprüche, in welchem der erste Spiegel (211) als Kathode (302) für die Elektrobeschichtung dient.

5. Verfahren nach einem der vorstehenden Ansprüche, in welchem die elektrisch isolierende Maske (312) Strukturierungsmuster aufweist, die isolierende Bereiche (316) und Aussparungen (314) umfassen, um den Umfang der Spiegel aus sättigbarem halb leitendem absorbierendem Material vorab zu bestimmen.

6. Herstellungsverfahren nach einem der vorstehenden Ansprüche, das unter anderem einen Schritt zur Abscheidung eines zweiten Spiegels (207) auf dem sättigbaren absorbierenden Material umfasst.

7. Verfahren nach Anspruch 6, das unter anderem einen Schritt zur Abscheidung einer ersten Phasenschicht (203) zwischen dem ersten Spiegel und dem sättigbaren absorbierenden Material und einen Schritt zur Abscheidung einer zweiten Phasenschicht (206) zwischen dem zweiten Spiegel (207) und dem sättigbaren absorbierenden Material (205) umfasst.

8. Verfahren nach einem der vorstehenden Ansprüche, das unter anderem einen Schritt zur Trennung der Spiegel aus sättigbarem halbleitendem absorbierendem Material, die durch die Maske (312) vorab bestimmt werden, umfasst.

9. Spiegel aus sättigbarem halbleitendem absorbierendem Material, umfassend:
- ein sättigbares halbleitendes absorbierendes Material (205);
- einen ersten Spiegel (211), der auf dem sättigbaren absorbierenden Material angebracht ist und eine Metallschicht umfasst;
- ein thermisch leitfähiges Substrat (212), **dadurch gekennzeichnet, dass** das besagte Substrat durch elektrolytische Abscheidung auf dem ersten Spiegel (211) ausgeführt ist.

10. Spiegel aus sättigbarem halbleitendem absorbierendem Material nach Anspruch 9, in welchem das sättigbare halbleitende absorbierende Material (205) durch eine Stapelung von halbleitenden Schichten gebildet wird, die Quantentöpfe und Barrieren bilden.

11. Spiegel aus sättigbarem halb leitendem absorbierendem Material nach einem der Ansprüche 9 und 10, in welchem das sättigbare absorbierende Material Kristalldefekte enthält, die die Lebensdauer der Träger in dem sättigbaren halb leitenden absorbierenden Material auf unter 100ps senken.

12. Spiegel aus sättigbarem halbleitendem absorbierendem Material nach einem der Ansprüche 9 bis 11, in welchem das thermisch leitfähige Substrat (212) eine Dicke zwischen 5 und 200 µm hat.

13. Spiegel aus sättigbarem halb leitendem absorbierendem Material nach einem der Ansprüche 9 bis 12, der unter anderem einen zweiten Spiegel (207) auf dem sättigbaren absorbierenden Material umfasst.

## Claims

1. A method for manufacturing semiconductor saturable absorber mirrors comprising:
- the deposition onto a growth substrate (200) of a semiconductor saturable absorbent material (205) so as to form a structure;
**characterized in that** said method for manufacturing further comprises:
- the deposition of at least one metal layer onto the structure in order to form a first mirror (211);
- the deposition by electro-deposition through an electrically-insulating mask (312) of a thermally-conductive substrate (212) onto the metal layer, allowing the selective deposition of the thermally-conductive substrate, in order to predefine the perimeter of the semiconductor saturable absorber mirrors.

2. The method as claimed in claim 1, comprising a step of introduction of crystal defects into the semiconductor saturable absorbent material in order to limit the lifetime of the carriers in the semiconductor saturable absorbent material to 100ps.

3. The method as claimed in claim 2, wherein the step of introduction of crystal defects comprises a step of ion irradiation in the saturable absorber material.

4. The method as claimed in any one of the preceding claims, wherein the first mirror (211) is used as a cathode (302) for the electro-deposition.

5. The method as claimed in any one of the preceding claims, wherein the electrically-insulating mask (312) has structure-forming patterns comprising insulating regions (316) and open areas (314), in order to predefine the perimeter of the semiconductor saturable absorber mirrors.

6. The method for manufacturing as claimed in any one of the preceding claims, further comprising a step of deposition of a second mirror (207) onto the saturable absorber material.

7. The method as claimed in claim 6, further comprising a step of deposition of a first phase layer (203) between the first mirror and the saturable absorbent material and a step of deposition of a second phase layer (206) between the second mirror (207) and the saturable absorbent material (205).

8. The method as claimed in any one of the preceding claims, further comprising a step of separation of the semiconductor saturable absorber mirrors predefined by the mask (312).

9. A semiconductor saturable absorber mirror comprising:
a semiconductor saturable absorbent material (205);
a first mirror (211) disposed on the saturable absorbent material comprising a metal layer;
a thermally-conductive substrate (212) **characterized in that** said substrate is formed by electrolytic deposition on the first mirror (211).

10. The semiconductor saturable absorber mirror as claimed in claim 9 in which the semiconductor saturable absorbent material (205) is composed of a stack of semiconductor layers forming quantum wells and barriers.

11. The semiconductor saturable absorber mirror as claimed in any one of claims 9 and 10, wherein the saturable absorbent material comprises crystal defects rendering the lifetime of the carriers in the semiconductor saturable absorbent material less than 100ps.

12. The semiconductor saturable absorber mirror as claimed in any one of claims 9 to 11, wherein the thermally-conductive substrate (212) has a thickness comprised between 5 and 200µm

13. The semiconductor saturable absorber mirror as claimed in any one of claims 9 to 12 further comprising a second mirror (207) on the saturable absorber material.
